# EUROPÄISCHE PATENTSCHRIFT

(11) **EP 4 066 360 B1**
(45) Veröffentlichungstag und Bekanntmachung des Hinweises auf die Patenterteilung: **25.03.2026**
(21) Anmeldenummer: 20801152.8
(22) Anmeldetag: 28.10.2020
(51) Int. Cl.: H02K 5/22, H02K 11/35, H04B 3/54

(54) **SYSTEM MIT ELEKTROMOTOR UND ÜBERTRAGUNG VON SENSORDATEN**
SYSTEM WITH ELECTRIC MOTOR AND SENSOR DATA TRANSMISSION
SYSTEME AVEC MOTEUR ELECTRIQUE ET TRANSMISSION DES DONNEES DES CAPTEURS

(30) Priorität: 25.11.2019 DE 102019008147
(43) Veröffentlichungstag der Anmeldung: 05.10.2022
(73) Patentinhaber: SEW-EURODRIVE GmbH & Co. KG, 76646 Bruchsal (DE)
(72) Erfinder: STANEK, Klaus, 76694 Forst (DE)
(86) Internationale Anmeldenummer: PCT/EP2020/025480
(87) Internationale Veröffentlichungsnummer: WO 2021/104662

(56) Entgegenhaltungen:
- DE-A1- 102007 052 445
- DE-A1- 102013 007 649
- FERRARIS ACCELERAION SENSOR: "ACC 93 @BULLET ACC 94 Ferraris-Beschleunigungssensor", 8 March 2007 (2007-03-08), XP055467154, Retrieved from the Internet <URL:http://www.tkd.com.ua/photos/texts/acc93_acc94.pdf> [retrieved on 20180413]

## Beschreibung

Die Erfindung betrifft ein System, insbesondere Anlage, mit Elektromotor.

Es ist allgemein bekannt, dass ein als Drehstrommotor ausgeführter Elektromotor über ein Drehstromkabel speisbar ist.

**Aus der** DE 199 57 064 A1 **ist ein Deckel für einen Motoranschlusskasten bekannt.**

**Aus der** DE 10 2016 113 028 A1 **ist ein System zur Überwachung des Energieverbrauchs in Industrieanlagen bekannt.**

**Aus der** WO 2009 / 109 245 A1 **ist ein Motorsystem mit Sensor und Auswerteeinheit bekannt.**

**Aus der** DE 10 2008 045 476 A1 **ist eine Antriebseinheit bekannt.**

**Aus der** WO 2012 / 113 496 A2 **ist eine Anordnung zur Bestimmung der Winkelstellung einer Welle bekannt.**

**Aus der** DE 10 2013 007649 A1 **ist als nächstliegender Stand der Technik ein Verfahren zum Betreiben eines Systems bekannt.**

**Aus der** DE 10 2007 052445 A1 **ist ein Elektromotor mit Anschlusskasten bekannt.**

**Aus der XP055467154 ist ein Ferraris Beschleunigungssensor bekannt.**

Der Erfindung liegt daher die Aufgabe zugrunde, einen Drehstrommotor in einfacher Weise mit erhöhter Sicherheit zu betreiben.

Erfindungsgemäß wird die Aufgabe bei dem System nach den in Anspruch 1 angegebenen Merkmalen gelöst. Weiterhin wird die Aufgabe durch ein Verfahren nach Anspruch 13 gelöst.

Wichtige Merkmale der Erfindung bei dem System, insbesondere Anlage, mit Elektromotor, sind, dass der Elektromotor einen Anschlusskasten aufweist, in welchen ein Drehstromkabel hineingeführt ist und in welchem die Statorwicklung, insbesondere die Drahtenden des Wicklungsdrahtes der Statorwicklung, des Elektromotors mit elektrischen Leitungen des Drehstromkabels elektrisch verbunden ist,
wobei ein Datensammler im Anschlusskasten des Elektromotors angeordnet ist, welcher einen Datenspeicher aufweist und welcher mit zumindest einem in und/oder am Elektromotor angeordneten Sensor elektrisch verbunden ist,
wobei der Datensammler eine elektronische Schaltung zur Aufmodulation und Demodulation von Spannungsanteilen aufweist.

Von Vorteil ist dabei, dass im, am oder beim Elektromotor erfasste Daten aufmodulierbar sind und von einem Rechner, der über Internet mit der im Schaltschrank angeordneten Signalelektronik verbunden ist, auswertbar und/oder überwachbar sind. Somit benötigt der Elektromotor keinen leistungsfähigen Rechner, sondern es wird zurückgegriffen auf einen über Internet verbundenen Rechner.

Von Vorteil ist bei der Erfindung somit, dass keine separate Zuleitung zum Motor notwendig ist, dass nur geringe Kosten für Installation und/oder Wartung anfallen, dass eine einfache Installation möglich ist, dass eine hohe Anlagenverfügbarkeit erreichbar ist, dass die Wahrscheinlichkeit und/oder Anzahl von Defekten und/oder Ausfällen reduziert ist und/oder dass eine Verfügbarkeit von Betriebsdaten erreichbar ist.

**Erfindungsgemäß** sind vom Sensor erfasste Werte einer physikalischen Größe im Datenspeicher speicherbar und mittels der Aufmodulation über die elektrischen Leitungen des Drehstromkabels übertragbar. Von Vorteil ist dabei, dass keine separaten zusätzlichen Leitungen notwendig sind, um die erfassten Werte der physikalischen Größen an einen leistungsfähigen Rechner zu übertragen, der dann die Daten mit rechenintensiven Operationen auswertet und überwacht.

Bei einer vorteilhaften Ausgestaltung sind vom Sensor erfasste Werte einer physikalischen Größe im Datenspeicher speicherbar und mittels der Aufmodulation über die elektrischen Leitungen des Drehstromkabels übertragbar an eine in einem Schaltschrank angeordnete Signalelektronik, die ebenfalls eine elektronische Schaltung zur Aufmodulation und Demodulation von Spannungsanteilen aufweist. Von Vorteil ist dabei, dass eine berührungslose Datenübertragung ausführbar ist und somit ein Condition Monitoring in einfacher Weise ausführbar ist.

Bei einer vorteilhaften Ausgestaltung ist die im Schaltschrank angeordnete Signalelektronik von einem Umrichter umfasst, der im Schaltschrank angeordnet ist und aus einem Wechselspannungsversorgungsnetz gespeist ist,
wobei die Signalelektronik pulsweitenmodulierte Ansteuersignale für steuerbare Halbleiterschalter des Umrichters erzeugt,
insbesondere wobei der Umrichter den Elektromotor mit einem Drehstrom mittels des Drehstromkabels versorgt, wobei die Frequenz des Drehstroms kleiner als die Frequenz der Spannungsanteile, insbesondere kleiner als 1 kHz, ist. Von Vorteil ist dabei, dass die Signalelektronik eines Umrichters nutzbar ist, um auch zusätzlich ein Condition Monitoring zu betreiben, wobei die erfassten Werte zunächst im Datenspeicher des Datensammlers (6) abgespeichert sind und danach die Auswertung der Daten ausgeführt wird.

**Erfindungsgemäß** findet **die Aufmodulation und Demodulation von Spannungsanteilen in einem oder mehreren ersten Zeitabschnitten statt, wobei der Elektromotor in dem oder den ersten Zeitabschnitten nicht versorgt ist und der Datensammler aus einem Energiespeicher des Datensammlers (6) versorgt ist,**
**wobei der Umrichter den Elektromotor mit dem Drehstrom in einem oder mehreren zweiten Zeitabschnitten versorgt,**
**wobei der oder die ersten Zeitabschnitte nicht überlappen mit dem oder den zweiten Zeitabschnitten. Von Vorteil ist dabei, dass in den ersten Zeitabschnitten die Störquellen reduzierbar sind, da kein Motorstrom vorhanden ist.**

Bei einer alternativen vorteilhaften Ausgestaltung findet **die Aufmodulation und Demodulation von Spannungsanteilen im Bereich von einem oder mehreren Nulldurchgängen eines Motorphasenstroms statt. Von Vorteil ist dabei, dass zumindest auf der für die Modulation der Spannungsanteile verwendeten Motorphasenzuleitung keine Störquelle vorhanden ist.**

Bei einer vorteilhaften Ausgestaltung ist die Frequenz der Spannungsanteile höher als die Frequenz des mittels des Drehstromkabels übertragenen Drehstroms und/oder höher als 1kHz. Von Vorteil ist dabei, dass auf derselben elektrischen Leitung Datenübertragbar sind, auf der auch die Leistung zuführbar ist.

Bei einer vorteilhaften Ausgestaltung ist der Elektromotor mittels des Drehstromkabels **direkt aus dem Wechselspannungsversorgungsnetz** versorgt,
wobei zwischen dem Drehstromkabel und dem Wechselspannungsversorgungsnetz ein Schalter, insbesondere ein Netzschütz, angeordnet ist,
wobei die im Schaltschrank angeordnete Signalelektronik mittels der elektronischen Schaltung zur Aufmodulation und Demodulation von Spannungsanteilen Spannungsanteile auf die elektrischen Leitungen aufmoduliert oder von den elektrischen Leitungen demoduliert und über ein Netzwerk, insbesondere Internet, mit einem Rechner zum Datenaustausch verbunden ist,
insbesondere wobei der Rechner zur Auswertung der im Datenspeicher gespeicherten Daten geeignet ausgeführt ist. Von Vorteil ist dabei, dass ein vom Versorgungsnetz direkt gespeister, also nicht drehzahlregelbarer, sondern mit konstanter Drehzahl betriebener Elektromotor mit einem Condition Monitoring ausführbar ist, insbesondere überwachbar ist.

Bei einer vorteilhaften Ausgestaltung ist die Frequenz der Spannungsanteile größer als die Frequenz des vom Wechselspannungsversorgungsnetz zur Verfügung gestellten Drehstroms. Von Vorteil ist dabei, dass Störungen vermieden werden, da ein genügend großer Bandabstand realisierbar ist.

Bei einer vorteilhaften Ausgestaltung weist der Anschlusskasten mit einem Gehäuseteil des Elektromotors einstückig, also einteilig, ausgebildet ist oder lösbar verbunden ist. Von Vorteil ist dabei, dass der Datensammler geschützt anordenbar ist.

Bei einer vorteilhaften Ausgestaltung ist ein weiterer Sensor, der außerhalb des Elektromotors und des Anschlusskastens angeordnet, mit dem Datensammler verbunden ist. Von Vorteil ist dabei, dass weitere physikalische Größen überwachbar sind.

Bei einer vorteilhaften Ausgestaltung ist im Datenspeicher des Datensammlers
- der Wert der durch einen in der Statorwicklung angeordneten Sensor erfassten Temperatur,
- der Wert der Netzfrequenz des Wechselspannungsversorgungsnetzes, insbesondere welcher von einem im Datensammler angeordneten Sensor zur Spannungserfassung erfasst ist, und/oder
- ein die Betriebsstunden repräsentierender Wert, insbesondere welcher durch ein Zeitbestimmungsmittel erfasst ist, welches die Zeit der nichtverschwindenden über das Drehstromkabel zur Verfügung gestellten Motorspannung bestimmt,
gespeichert. Von Vorteil ist dabei, dass Betriebsdaten gesammelt und auswertbar sind, insbesondere überwachbar auf Überschreiten eines jeweiligen Schwellwerts. Wenn also die über das Drehstromkabel bereit gestellte Spannung des Wechselspannungsversorgungsnetzes einen Schwellwert übersteigt, ist eine Überspannung detektierbar und somit eine Warnung anzeigbar, weiterleitbar oder herausgebbar, insbesondere vom über das Netzwerk verbundenen Rechner.

Bei einer vorteilhaften Ausgestaltung ist der weitere Sensor ein Beschleunigungssensor. Von Vorteil ist dabei, dass eine Überwachung auf an der Rotorwelle auftretende unzulässig hohe Axialbeschleunigungen in einfacher Weise ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

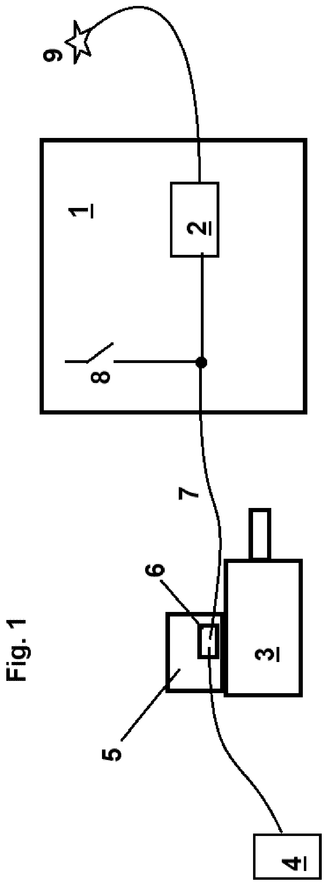

In der Figur 1 ist eine Schrägansicht ist ein erfindungsgemäßes System, insbesondere Anlage, schematisch skizziert.

Wie in Figur 1 dargestellt, weist ein Elektromotor 3 einen Anschlusskasten, insbesondere Klemmenkasten, auf, zu welchem ein Drehstromkabel 7 geführt ist, dass innerhalb des Anschlusskastens mit der Statorwicklung elektrisch verbunden ist.

Der Elektromotor 3 ist als Drehstrommotor ausgeführt, insbesondere wobei die Statorwicklung als Drehstromwicklung ausgeführt ist.

Außerdem sind Sensoren 4, welche außerhalb des Elektromotors 3 und seinem Anschlusskasten 5 angeordnet sind, mittels eines jeweiligen Kabels mit einem Datensammler 6 verbunden, welcher innerhalb des Anschlusskastens 5 angeordnet ist.

Der Datensammler 6 ist als erste Signalelektronik ausgeführt, welche einen Datenspeicher aufweist und eine elektronische Schaltung zur Aufmodulation und Demodulation von Spannungsanteilen, deren Frequenz höher ist als die Frequenz der vom Öffentlichen Versorgungsnetz über einen Schalter 8, insbesondere Schütz, und das Drehstromkabel 7 bereit gestellte Drehspannung.

Somit werden Daten durch Aufmodulation vom Datensammler 6 über das Drehstromkabel 7 an eine in demjenigen Schaltschrank angeordnete Signalelektronik 2 übertragen, in welchem auch der Schalter 8 angeordnet ist.

Die Signalelektronik 2 weist ebenfalls eine elektronische Schaltung zur Aufmodulation und Demodulation der höherfrequenten Spannungsanteile auf und umfasst darüber hinaus eine mit dem Internet verbunden Schnittstelle.

Innerhalb des Elektromotors 3, insbesondere innerhalb der Statorwicklung, ist aber auch ein weiterer Sensor angeordnet, welcher Temperatur erfasst, und mittels einer elektrischen Leitung mit dem Datensammler verbunden ist. Darüber hinaus sind auch weitere im Elektromotor 3 angeordnete Sensoren mit dem Datensammler 6 verbindbar. Auf diese Weise ist auch ein an der Rotorwelle des Elektromotors 3 erfasster Drehmomentwert und/oder Querkraftwert und/oder eine Drehzahl und/oder eine Winkelstellung der Rotorwelle erfassbar und deren Werte dem Datensammler 6 zuführbar.

Im Datensammler 6 ist auch eine Auswertung der Sensorsignale ausführbar. Selbstverständlich ist keine rechenintensive Auswertung durch den Datensammler 6 ausführbar, da er keinen leistungsfähigen Rechner umfasst. Jedoch sind einfache Operationen ausführbar, wie Mittelwertbildung, Bildung eines gleitenden Mittelwertes, Tiefpassfilterung und/oder Bildung von Differenzen und/oder Bildung eines Differenzenquotienten. Beispielsweise ist aus den erfassten Werten der Winkellage eine jeweils aktuelle Winkelgeschwindigkeit bestimmbar und diese dann mittels Aufmodulation übertragbar an die Signalelektronik 2 des Schaltschranks beziehungsweise über die Signalelektronik 2 ins Internet 9, also an einen Server des Internets.

Somit ist ein einfacher Elektromotor 3, der direkt vom Öffentlichen Versorgungsnetz gespeist wird, insbesondere also nicht von einem Wechselrichter oder Umrichter, mit einem Condition Monitoring ausstattbar, wobei eine weitergehende Auswertung oder zumindest wesentliche Teile der Auswertung und/oder Überwachung der Daten in einem Server des Internet oder eine damit verbundenen Rechner ausführbar ist.

Somit ist die rechenaufwendige Auswertung der mit dem oder den Sensoren erfassten physikalischen Größen in einfacher Weise ausführbar an einem leistungsstarken Rechner.

Der Datensammler 6 ist aber auch elektrisch aus dem Drehstromkabel 7 versorgt. Somit ist keine separate Versorgungsleitung für den Datensammler 6 notwendig.

Vorzugsweise weist der Datensammler 6 eine mit zumindest einer elektrischen Leitung des Drehstromkabels 7 induktiv gekoppelte Wicklung auf, wobei die an der Wicklung von der elektrischen Leitung induzierte Spannung einerseits einem Tiefpass und/oder Gleichrichter zugeführt wird zur Erzeugung einer Gleichspannung, welche den Datensammler 6 versorgt, und andererseits einem Bandpass oder Hochpass, dessen charakteristische Frequenz oberhalb des Zehnfachen der Frequenz des Öffentlichen Wechselstromnetzes liegt, zur Auskopplung eines auf die elektrische Leitung aufmodulierten Spannungsanteils.

Auf diese Weise ist der Datensammler 6 mit einer elektrischen Gleichspannung versorgbar und der Datenempfang beispielsweise oberhalb 1 kHz ausführbar und von dem Drehstromkabel 7 demodulierbar.

Ebenso erfolgt ein Aufmodulieren von Daten über die Wicklung, wobei die Daten dann empfangbar sind von der Signalelektronik 2 und von derselben auch an einen Server des Internet 9 übertragbar sind.

Alternativ ist auch statt der galvanischen Trennung zwischen eine galvanische direkte Versorgung des Datensammler 6 ermöglicht, indem der Datensammler 6 direkt aus dem in einem Klemmbrett aufgelegten elektrischen Leitungen des Drehstromkabels 7, an denen auch die Statorwicklung des Elektromotors 3 angeschlossen ist, versorgt wird.

Bei weiteren erfindungsgemäßen Ausführungsbeispielen wird der Motor 3 nicht direkt über das Drehstromkabel 7 aus dem Öffentlichen Wechselspannungsversorgungsnetzes, sondern über einen Umrichter versorgt, welcher aus dem Öffentlichen Wechselspannungsversorgungsnetz versorgt wird. Dabei fungiert die Signalelektronik 2 vorzugsweise als Signalelektronik des Umrichters und erzeugt pulsweitenmodulierte Ansteuersignale für steuerbare Halbleiterschalter des Umrichters, wobei die Signalelektronik 2 weiterhin mit einem Internet-Server verbunden ist.

Somit sind die erfassten Werte physikalischer Größen, wie Temperatur und/oder Drehmoment, direkt berücksichtigbar.

Vorzugsweise werden die Spannungsanteile nicht zeitgleich zur Leistungsversorgung des Elektromotors 3 auf das Drehstromkabel 7 aufmoduliert, sondern zeitlich separat.

### Bezugszeichenliste

1 Schaltschrank
2 Signalelektronik
3 Elektromotor
4 externe Sensoren
5 Anschlusskasten
6 Datensammler
7 Drehstromkabel
8 Schalter
9 Internet
10 Temperatursensor

## Patentansprüche

1. System, insbesondere Anlage, mit Elektromotor (3),
wobei der Elektromotor (3) einen Anschlusskasten (5) aufweist, in welchen ein Drehstromkabel (7) hineingeführt ist und in welchem die Statorwicklung, insbesondere die Drahtenden des Wicklungsdrahtes der Statorwicklung, des Elektromotors (3) mit elektrischen Leitungen des Drehstromkabels (7) elektrisch verbunden ist,
**wobei** ein Datensammler (6) im Anschlusskasten (5) des Elektromotors (3) angeordnet ist, welcher einen Datenspeicher aufweist und welcher mit zumindest einem in und/oder am Elektromotor (3) angeordneten Sensor (4) elektrisch verbunden ist,
wobei der Datensammler (6) eine elektronische Schaltung zur Aufmodulation und Demodulation von Spannungsanteilen **auf die elektrischen Leitungen des Drehstromkabels (7)** aufweist,
**wobei das System derart geeignet ausgeführt ist, dass vom Sensor (4) erfasste Werte einer physikalischen Größe im Datenspeicher gespeichert werden und mittels der Aufmodulation über die elektrischen Leitungen des Drehstromkabels (7) übertragen werden,**
**dadurch gekennzeichnet, dass**
**die Aufmodulation und Demodulation der Spannungsanteile in einem oder mehreren ersten Zeitabschnitten stattfindet, wobei der Elektromotor (3) in dem oder den ersten Zeitabschnitten nicht versorgt ist und der Datensammler (6) aus einem Energiespeicher des Datensammlers (6) versorgt ist,**
**wobei der Umrichter ausgebildet ist, den Elektromotor (3) mit dem Drehstrom in einem oder mehreren zweiten Zeitabschnitten zu versorgen,**
**wobei der oder die ersten Zeitabschnitte nicht überlappen mit dem oder den zweiten Zeitabschnitten.**

2. System nach Anspruch 1,
**dadurch gekennzeichnet, dass**
vom Sensor (4) erfasste Werte einer physikalischen Größe im Datenspeicher speicherbar und mittels der Aufmodulation über die elektrischen Leitungen des Drehstromkabels (7) übertragbar sind an eine in einem Schaltschrank (1) angeordnete Signalelektronik (2), die ebenfalls eine elektronische Schaltung zur Aufmodulation und Demodulation von weiteren Spannungsanteilen aufweist.

3. **System nach Anspruch 2,**
**dadurch gekennzeichnet, dass**
die im Schaltschrank (1) angeordnete Signalelektronik (2) von einem Umrichter umfasst ist, der im Schaltschrank (1) angeordnet ist und aus einem Wechselspannungsversorgungsnetz gespeist ist,
wobei die Signalelektronik (2) **ausgebildet ist,** pulsweitenmodulierte Ansteuersignale für steuerbare Halbleiterschalter des Umrichters **zu erzeugen,**
insbesondere wobei der Umrichter **ausgebildet ist,** den Elektromotor (3) mit einem Drehstrom mittels des Drehstromkabels (7) **zu versorgen,** wobei die Frequenz des Drehstroms kleiner als die Frequenz der Spannungsanteile, insbesondere kleiner als 1 kHz, ist.

4. System nach einem der vorangegangenen Ansprüche,
**dadurch gekennzeichnet, dass**
die Frequenz der Spannungsanteile höher ist als die Frequenz des mittels des Drehstromkabels (7) übertragenen Drehstroms und/oder höher ist als 1kHz.

5. System nach einem der vorangegangenen Ansprüche,
**dadurch gekennzeichnet, dass**
der Elektromotor (3) mittels des Drehstromkabels (7) **direkt aus dem Wechselspannungsversorgungsnetz** versorgt ist,
wobei zwischen dem Drehstromkabel und dem Wechselspannungsversorgungsnetz ein Schalter (8), insbesondere ein Netzschütz, angeordnet ist,
wobei die im Schaltschrank (1) angeordnete Signalelektronik (2) mittels der elektronischen Schaltung zur Aufmodulation und Demodulation von Spannungsanteilen Spannungsanteile auf die elektrischen Leitungen aufmoduliert oder von den elektrischen Leitungen demoduliert und über ein Netzwerk, insbesondere Internet (9), mit einem Rechner zum Datenaustausch verbunden ist,
insbesondere wobei der Rechner zur Auswertung der im Datenspeicher gespeicherten Daten geeignet ausgeführt ist.

6. System nach einem der vorangegangenen Ansprüche,
**dadurch gekennzeichnet, dass**
die Frequenz der **aufmodulierten oder demodulierten** Spannungsanteile größer ist als die Frequenz des vom Wechselspannungsversorgungsnetz zur Verfügung gestellten Drehstroms.

7. System nach einem der vorangegangenen Ansprüche,
**dadurch gekennzeichnet, dass**
der Anschlusskasten (5) mit einem Gehäuseteil des Elektromotors (3) einstückig, also einteilig, ausgebildet ist oder lösbar verbunden ist.

8. System nach einem der vorangegangenen Ansprüche,
**dadurch gekennzeichnet, dass**
ein weiterer Sensor (4), der außerhalb des Elektromotors (3) und des Anschlusskastens (5) angeordnet ist, mit dem Datensammler (6) verbunden ist.

9. System nach einem der vorangegangenen Ansprüche,
**dadurch gekennzeichnet, dass**
im Datenspeicher des Datensammlers (6)
- der Wert der durch einen in der Statorwicklung angeordneten Sensor (4) erfassten Temperatur,
- der Wert der Netzfrequenz des Wechselspannungsversorgungsnetzes, insbesondere welcher von einem im Datensammler (6) angeordneten Sensor (4) zur Spannungserfassung erfasst ist,
- eine Anzahl der Umdrehungen der Rotorwelle
und/oder
- ein die Betriebsstunden repräsentierender Wert, insbesondere welcher durch ein Zeitbestimmungsmittel erfasst ist, welches die Zeitdauer der nichtverschwindenden über das Drehstromkabel zur Verfügung gestellten Motorspannung bestimmt,
gespeichert ist.

10. System nach Anspruch **9,**
**dadurch gekennzeichnet, dass**
die Anzahl der Umdrehungen der Rotorwelle, insbesondere seit Beginn des Betriebs des Elektromotors (3), durch Auswertung des Signals eines Sensors (4) bestimmt ist, welcher, insbesondere seit Beginn des Betriebs des Elektromotors (3), die Anzahl der Perioden der den Elektromotor (3) versorgenden Spannung erfasst.

11. System nach Anspruch 9,
**dadurch gekennzeichnet, dass**
die Anzahl der Umdrehungen der Rotorwelle, insbesondere seit Beginn des Betriebs des Elektromotors (3), aus dem Zählerstand eines Zählers bestimmt ist, welcher die Nulldurchgänge eines Phasenstroms oder des Motorstroms des Elektromotors (3) zählt.

12. System nach einem der **Ansprüche 8 bis 11,**
**dadurch gekennzeichnet, dass**
der weitere Sensor (4) ein Beschleunigungssensor ist.

13. Verfahren zum Betreiben eines Systems, insbesondere Anlage, mit Elektromotor (3) nach einem der vorangegangenen Ansprüche,
**dadurch gekennzeichnet, dass**
**die Aufmodulation und Demodulation von Spannungsanteilen in einem oder mehreren ersten Zeitabschnitten ausgeführt wird,**
**wobei der Elektromotor (3) in einem oder mehreren zweiten Zeitabschnitten mit elektrischer Leistung zur Erzeugung von mechanischem Drehmoment versorgt wird,**
**wobei der oder die ersten Zeitabschnitte nicht überlappen mit dem oder den zweiten Zeitabschnitten.**

## Claims

1. System, in particular a facility, comprising an electric motor (3),
the electric motor (3) having a junction box (5) into which a three-phase cable (7) is led and in which the stator winding, in particular the wire ends of the winding wire of the stator winding, of the electric motor (3) is electrically connected to electrical lines of the three-phase cable (7),
a data collector (6) being arranged in the junction box (5) of the electric motor (3), said data collector having a data store and being electrically connected to at least one sensor (4) arranged in and/or on the electric motor (3),
the data collector (6) having an electronic circuit for modulating and demodulating voltage components onto the electrical lines of the three-phase cable (7),
the system being suitably configured such that values of a physical variable that are acquired by the sensor (4) are stored in the data store and are transmitted via the electrical lines of the three-phase cable (7) by means of the modulation,
**characterised in that**
the voltage components are modulated and demodulated in one or more first time intervals, the electric motor (3) not being powered in the first time interval(s) and the data collector (6) being powered from an energy store of the data collector (6),
the converter being configured to supply the electric motor (3) with the three-phase current in one or more second time intervals,
the first time interval(s) not overlapping with the second time interval(s).

2. System according to claim 1,
**characterised in that**
values of a physical variable that are acquired by the sensor (4) can be stored in the data store and can be transmitted, via the electrical lines of the three-phase cable (7) by means of the modulation, to signal electronics (2) which are arranged in a switchgear cabinet (1) and which likewise have an electronic circuit for modulating and demodulating further voltage components.

3. System according to claim 2,
**characterised in that**
the signal electronics (2) arranged in the switchgear cabinet (1) are comprised by a converter which is arranged in the switchgear cabinet (1) and which is fed from an AC voltage power grid,
the signal electronics (2) being configured to generate pulse-width-modulated actuation signals for controllable semiconductor switches of the converter,
the converter in particular being configured to supply the electric motor (3) with a three-phase current by means of the three-phase cable (7), the frequency of the three-phase current being less than the frequency of the voltage components, in particular less than 1 kHz.

4. System according to any of the preceding claims,
**characterised in that**
the frequency of the voltage components is higher than the frequency of the three-phase current transmitted by means of the three-phase cable (7) and/or higher than 1 kHz.

5. System according to any of the preceding claims,
**characterised in that**
the electric motor (3) is powered directly from the AC voltage power grid by means of the three-phase cable (7),
a switch (8), in particular a mains contactor, being arranged between the three-phase cable and the AC voltage power grid,
the signal electronics (2) arranged in the switchgear cabinet (1) modulating voltage components onto the electrical lines or demodulating voltage components from the electrical lines by means of the electronic circuit for modulating and demodulating voltage components, and being connected, over a network, in particular the internet (9), to a computer for data exchange,
the computer in particular being suitably configured for evaluating the data stored in the data store.

6. System according to any of the preceding claims,
**characterised in that**
the frequency of the modulated or demodulated voltage components is greater than the frequency of the three-phase current made available by the AC voltage power grid.

7. System according to any of the preceding claims,
**characterised in that**
the junction box (5) is formed in one piece, i.e. in one part, with a housing part of the electric motor (3), or is detachably connected thereto.

8. System according to any of the preceding claims,
**characterised in that**
a further sensor (4) arranged outside the electric motor (3) and the junction box (5) is connected to the data collector (6).

9. System according to any of the preceding claims,
**characterised in that**
- the value of the temperature acquired by a sensor (4) arranged in the stator winding,
- the value of the grid frequency of the AC voltage power grid, which in particular is acquired by a voltage acquisition sensor (4) arranged in the data collector (6),
- a number of revolutions of the rotor shaft and/or
- a value representing the operating hours, which in particular is acquired by a time determination means that determines the duration of the non-negligible motor voltage made available by means of the three-phase cable,
is/are stored in the data store of the data collector (6).

10. System according to claim 9,
**characterised in that**
the number of revolutions of the rotor shaft, in particular since the electric motor (3) began to operate, is determined by evaluating the signal of a sensor (4) that acquires the number of periods of the voltage powering the electric motor (3), in particular since the electric motor (3) began to operate.

11. System according to claim 9,
**characterised in that**
the number of revolutions of the rotor shaft, in particular since the electric motor (3) began to operate, is determined from the counter status of a counter that counts the zero crossings of a phase current or of the motor current of the electric motor (3).

12. System according to any of claims 8 to 11,
**characterised in that**
the further sensor (4) is an acceleration sensor.

13. Method for operating a system, in particular a facility, comprising an electric motor (3) according to any of the preceding claims,
**characterised in that**
voltage components are modulated and demodulated in one or more first time intervals,
the electric motor (3) being supplied, in one or more second time intervals, with electric power for generating mechanical torque,
the first time interval(s) not overlapping with the second time interval(s).

## Revendications

1. Système, en particulier installation, comprenant un moteur électrique (3),
le moteur électrique (3) présentant un boîtier de raccordement (5) au sein duquel est guidé un câble triphasé (7) et au sein duquel l'enroulement de stator, en particulier les extrémités de fil du fil d'enroulement de l'enroulement de stator, du moteur électrique (3) est électriquement relié à des lignes électriques du câble triphasé (7),
un collecteur de données (6) étant agencé dans le boîtier de raccordement (5) du moteur électrique (3) et présentant une mémoire de données et étant électriquement relié à au moins un capteur (4) agencé dans et/ou sur le moteur électrique (3),
le collecteur de données (6) présentant un circuit électronique permettant une modulation et une démodulation de composantes de tension sur les lignes électriques du câble triphasé (7),
le système étant conçu de manière appropriée pour que des valeurs d'une grandeur physique détectées par le capteur (4) soient stockées dans la mémoire de données et transmises au moyen de la modulation par l'intermédiaire des lignes électriques du câble triphasé (7),
**caractérisé en ce que**
la modulation et la démodulation des composantes de tension ont lieu au cours d'un ou de plusieurs premier(s) laps de temps, le moteur électrique (3) n'étant pas alimenté au cours du ou des premier(s) laps de temps et le collecteur de données (6) étant alimenté à partir d'un accumulateur d'énergie du collecteur de données (6),
le convertisseur étant conçu pour alimenter le moteur électrique (3) en courant triphasé au cours d'un ou de plusieurs second(s) laps de temps,
le ou les premier(s) laps de temps ne chevauchant pas le ou les second(s) laps de temps.

2. Système selon la revendication 1,
**caractérisé en ce que**
des valeurs d'une grandeur physique détectées par le capteur (4) peuvent être stockées dans la mémoire de données et peuvent être transmises au moyen de la modulation par l'intermédiaire des lignes électriques du câble triphasé (7) à une électronique de signal (2) qui est agencée dans une armoire de commande (1) et présente également un circuit électronique permettant la modulation et la démodulation d'autres composantes de tension.

3. Système selon la revendication 2,
**caractérisé en ce que**
l'électronique de signal (2) agencée dans l'armoire de commande (1) est entourée d'un convertisseur qui est agencé dans l'armoire de commande (1) et qui est alimenté par un réseau d'alimentation en tension alternative,
l'électronique de signal (2) étant conçue pour générer des signaux de commande à modulation de largeur d'impulsion pour des commutateurs commandables à semiconducteurs du convertisseur,
le convertisseur étant en particulier conçu pour alimenter le moteur électrique (3) en courant triphasé au moyen du câble triphasé (7), la fréquence du courant triphasé étant inférieure à la fréquence des composantes de tension, en particulier inférieure à 1 kHz.

4. Système selon l'une quelconque des revendications précédentes,
**caractérisé en ce que**
la fréquence des composantes de tension est supérieure à la fréquence du courant triphasé transmis par le câble triphasé (7) et/ou est supérieure à 1 kHz.

5. Système selon l'une quelconque des revendications précédentes,
**caractérisé en ce que**
le moteur électrique (3) est alimenté directement à partir du réseau d'alimentation en tension alternative au moyen du câble triphasé (7),
un interrupteur (8), en particulier un contacteur de réseau, étant agencé entre le câble triphasé et le réseau d'alimentation en tension alternative,
l'électronique de signal (2) agencée dans l'armoire de commande (1) modulant des composantes de tension vers les lignes électriques ou les démodulant à partir des lignes électriques au moyen du circuit électronique permettant la modulation et la démodulation de composantes de tension, et étant reliée par l'intermédiaire d'un réseau, en particulier d'Internet (9), à un ordinateur en vue d'un échange de données, l'ordinateur étant en particulier conçu pour évaluer les données stockées dans la mémoire de données.

6. Système selon l'une quelconque des revendications précédentes,
**caractérisé en ce que**
la fréquence des composantes de tension modulées ou démodulées est supérieure à la fréquence du courant triphasé fourni par le réseau d'alimentation en tension alternative.

7. Système selon l'une quelconque des revendications précédentes,
**caractérisé en ce que**
le boîtier de raccordement (5) est réalisé d'un seul tenant, c'est-à-dire d'une seule pièce, avec une partie carter du moteur électrique (3) ou est relié à celle-ci de manière amovible.

8. Système selon l'une quelconque des revendications précédentes,
**caractérisé en ce que**
un autre capteur (4), agencé à l'extérieur du moteur électrique (3) et du boîtier de raccordement (5), est relié au collecteur de données (6).

9. Système selon l'une quelconque des revendications précédentes,
**caractérisé en ce que**
- la valeur de la température détectée par un capteur (4) agencé dans l'enroulement de stator,
- la valeur de la fréquence de réseau du réseau d'alimentation en tension alternative, en particulier celle enregistrée par un capteur (4) agencé dans le collecteur de données (6) en vue d'une détection de tension,
- un nombre de tours de l'arbre de rotor
et/ou
- une valeur représentant les heures de fonctionnement, en particulier celle enregistrée par un moyen de détermination de temps déterminant la durée de la tension de moteur fournie par l'intermédiaire du câble triphasé et ne disparaissant pas,
est stocké(e) dans la mémoire de données du collecteur de données (6).

10. Système selon la revendication 9,
**caractérisé en ce que**
le nombre de tours de l'arbre d rotor, en particulier depuis le début du fonctionnement du moteur électrique (3), est déterminé grâce à une évaluation du signal d'un capteur (4) qui, en particulier depuis le début du fonctionnement du moteur électrique (3), enregistre le nombre des périodes de la tension alimentant le moteur électrique (3).

11. Système selon la revendication 9,
**caractérisé en ce que**
le nombre de tours de l'arbre de rotor, en particulier depuis le début du fonctionnement du moteur électrique (3), est déterminé à partir de l'état de compteur d'un compteur qui compte les passages à zéro d'un courant de phase ou du courant de moteur du moteur électrique (3).

12. Système selon l'une quelconque des revendications 8 à 11,
**caractérisé en ce que**
l'autre capteur (4) est un capteur d'accélération.

13. Procédé de fonctionnement d'un système, en particulier d'une installation, comprenant un moteur électrique (3) selon l'une quelconque des revendications précédentes,
**caractérisé en ce que**
la modulation et la démodulation des composantes de tension sont effectuées au cours d'un ou de plusieurs premier(s) laps de temps,
le moteur électrique (3) étant alimenté au cours d'un ou de plusieurs second(s) laps de temps avec une puissance électrique permettant de générer un couple mécanique, le ou les premier(s) laps de temps ne chevauchant pas le ou les second(s) laps de temps.
